# EUROPÄISCHE PATENTSCHRIFT

(11) **EP 1 068 063 B1**
(45) Veröffentlichungstag und Bekanntmachung des Hinweises auf die Patenterteilung: **24.07.2002**
(21) Anmeldenummer: 00912344.9
(22) Anmeldetag: 02.02.2000
(51) Int. Cl.: B29C 65/18, B65B 51/12

(54) **VORRICHTUNG ZUM VERSCHLIESSEN VON AUS EINEM HEISSSIEGELFÄHIGEN MATERIAL HERGESTELLTEN VERPACKUNGEN**
DEVICE FOR SEALING PACKAGING MADE FROM A HEAT SEALING MATERIAL
DISPOSITIF DESTINE A FERMER DES EMBALLAGES CONSTITUES D'UNE MATIERE THERMOSOUDABLE

(30) Priorität: 03.02.1999 DE 19904154
(43) Veröffentlichungstag der Anmeldung: 17.01.2001
(73) Patentinhaber: ROBERT BOSCH GMBH, 70442 Stuttgart (DE)
(72) Erfinder: ROMIJN, Barend, Bastiaan, NL-6002 VX Weert (NL)
(86) Internationale Anmeldenummer: DE0000322
(87) Internationale Veröffentlichungsnummer: WO0046012

(56) Entgegenhaltungen:
- EP-A- 0 730 946
- DE-A- 4 420 808
- US-A- 4 444 614
- US-A- 4 768 326

## Beschreibung

### Stand der Technik

Die Erfindung betrifft eine Vorrichtung zum Verschließen von aus einem heißsiegelfähigen Material hergestellten Verpackungen nach dem Oberbegriff des Anspruchs 1, wie sie aus der US-PS 4,768,326 bekannt geworden ist. Bei der bekannten Vorrichtung sind die Ausnehmungen für die flexiblen Siegelflächen derart angeordnet, daß die Flexibilität der Siegelflächen über die gesamte Höhe der Quernaht der Verpackung gleich ist und längs der Quernaht im Bereich der Längsnaht der Verpackung am höchsten ist. Dazu ist im Bereich der Längsnaht der Verpackung in der Siegelfläche ein zusätzlicher Längsschlitz ausgebildet. Nachteilig dabei ist, daß im Bereich des zusätzlichen Längsschlitzes die Siegelqualität aufgrund des dort geringen Siegeldrucks kritisch ist.

Weiterhin ist es aus der DE 29 34 807 A1 bekannt, zum Ausgleich einer unterschiedlichen Anzahl von Packstofflagen längs einer Siegelnaht eines Schlauchbeutels an der Siegelbacke im Bereich der Siegelnaht einen verformbaren, mit einem Medium befüllten Wärmeträger anzuordnen, der von einer Abdeckung umgeben ist. Eine derartige Vorrichtung ist durch die verschiedenen Bauteile relativ aufwendig aufgebaut. Ferner ist aus dem DE-GM 94 13 035 eine Vorrichtung bekannt, in deren Siegelbacken längliche Silikoneinlagen vorgesehen sind, um eine unterschiedliche Anzahl von Packstofflagen längs einer Siegelnaht eines Schlauchbeutels ausgleichen zu können. Die Verwendung von Silikon hat jedoch den Nachteil, daß die Wärmeleitfähigkeit von Silikon von dem übrigen Bereich der Siegelbacken stark unterschiedlich ist, wodurch sich Probleme im Betrieb bezüglich der Siegelqualität ergeben.

### Vorteile der Erfindung

Die erfindungsgemäße Vorrichtung zum Verschließen von aus einem heißsiegelfähigen Material hergestellten Verpackungen mit den kennzeichnenden Merkmalen des Anspruchs 1 hat demgegenüber den Vorteil, daß sie bei einfachem Aufbau durch den Verzicht auf zusätzliche Anbauteile besonders dichte Quernähte ermöglicht, da sowohl quer als auch längs der Quernaht unterschiedliche Siegeldrücke erzielt werden, derart, daß sich der Siegeldruck an die unterschiedlichen Materialstärken besonders gut anpaßt.

Weitere vorteilhafte Weiterbildungen der erfindungsgemäßen Vorrichtung zum Verschließen von aus einem heißsiegelfähigen Material hergestellten Verpackungen ergeben sich aus den Unteransprüchen.

### Zeichnung

Ausführungsbeispiele der Erfindung sind in der Zeichnung dargestellt und werden nachfolgend näher erläutert. Es zeigen:
Figur 1 eine Verpackung in einer perspektivischen Ansicht,
Figur 2 einen Schnitt in der Ebene II-II der Figur 1,
Figur 3 eine erste erfindungsgemäße Vorrichtung im Querschnitt,
Figur 4 eine zweite erfindungsgemäße Vorrichtung im Querschnitt,
Figur 5 eine Ansicht in Richtung V-V der Figur 4,
Figur 6 eine dritte erfindungsgemäße Vorrichtung im Querschnitt und die
Figuren 7 bis 9 Längsschnitte durch modifizierte Siegelbacken.

### Beschreibung der Ausführungsbeispiele

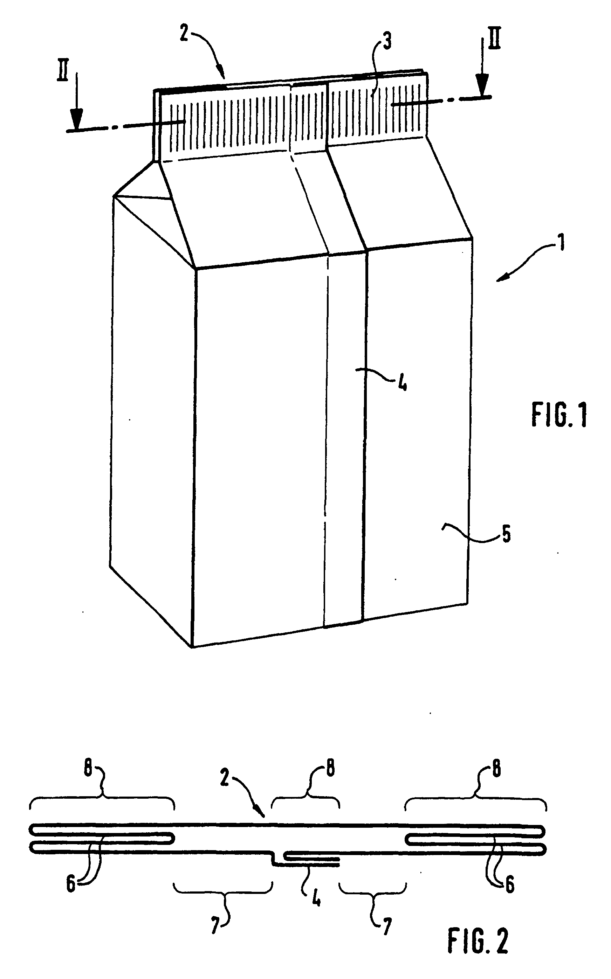

In der Figur 1 ist eine Verpackung in Form einer Schlauchbeutelpackung 1 mit im wesentlichen rechteckiger Querschnittsfläche dargestellt. Die insbesondere auf einer Schlauchbeutelmaschine aus einem heißsiegelfähigen Packstoff hergestellte Schlauchbeutelpackung 1 hat einen flossenartig gefalteten Kopfverschluß 2 mit einer Quersiegelnaht 3 und einer Längssiegelnaht 4, die sich über die gesamte eine Vorderseite 5 der Schlauchbeutelpackung 1 und deren Kopfverschluß 2 sowie dem nicht näher bezeichneten Bodenbereich erstrecken. Durch das Falten des Kopfverschlusses 2 mit V-förmig eingezogenen Seitenfalten 6 sowie der Längssiegelnaht 4 hat der Kopfverschluß 2 einen Bereich 7, in dem der Packstoff zweilagig ist und einen Bereich 8, in dem der Packstoff vierlagig ist (Figur 2). Im übrigen weist auch der ebenfalls quergesiegelte Bodenbereich der Schlauchbeutelpackung 1 Bereiche mit unterschiedlichen Anzahlen von Packstofflagen auf.

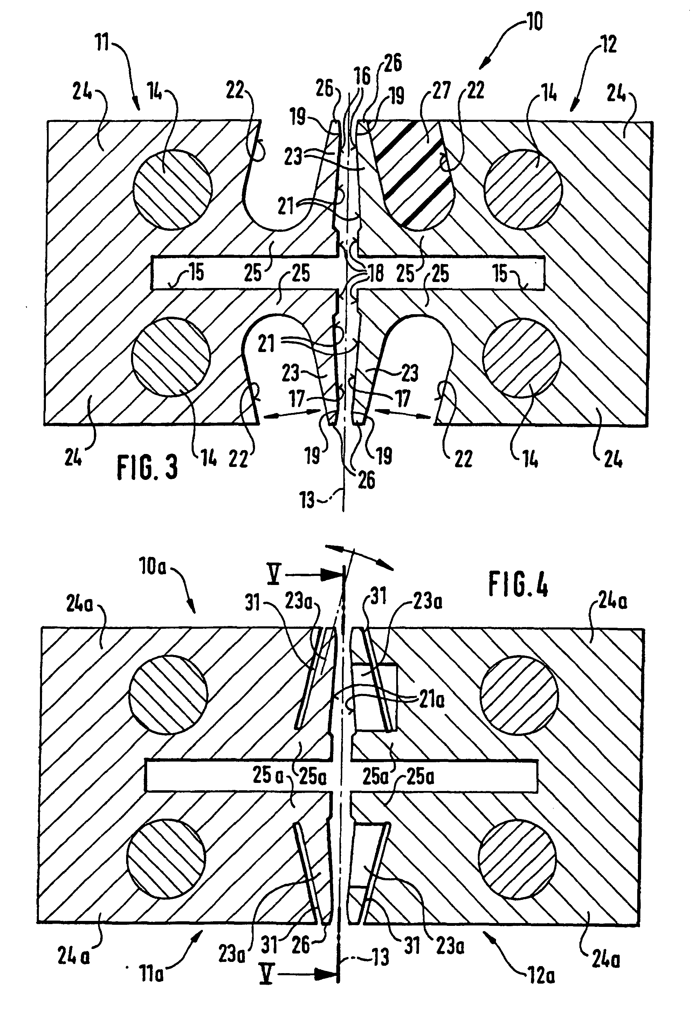

Zum Bilden der Quersiegelnaht 3 dient die in der Figur 3 dargestellte Vorrichtung 10. Die Vorrichtung 10 hat zwei aus Metall bestehende Siegelbacken 11, 12, die symmetrisch zu einer Siegelebene 13 gegeneinander verfahrbar sind. In jeder Siegelbacke 11, 12 ist eine Heizeinrichtung in Form eines oder mehrerer elektrischer Heizstäbe 14 angeordnet. Mittig in jeder Siegelbacke 11, 12 ist auf der der Siegelebene 13 zugewandten Seite je eine Aussparung 15 ausgebildet, in der eine Trennrichtung in Form eines nicht dargestellten Trennmessers angeordnet ist. Die Aussparung 15 trennt in jeder der Siegelbacken 11, 12 einen oberen Stirnflächenabschnitt 16 von einem unteren Stirnflächenabschnitt 17 ab. Die oberen Stirnflächenabschnitte 16 dienen zum Bilden einer Bodenquernaht für eine noch zu befüllende Schlauchbeutelpackung 1, während mittels der beiden unteren Stirnflächenabschnitte 17 die Quersiegelnaht 3 einer bereits befüllten Schlauchbeutelpackung 1 gebildet wird.

An jedem der Stirnflächenabschnitte 16, 17 sind jeweils zwei streifenförmige, zum Beispiel ca. 3mm breite Siegelbereiche 18, 19 ausgebildet, die sich in Längsrichtung der zu bildenden Quersiegelnaht 3 bzw. Bodenquernaht erstrecken. Während sich die einen Siegelbereiche 18 unmittelbar an die Ausnehmungen 15 anschließen, befinden sich die anderen Siegelbereiche 19 an den der Aussparung 15 abgewandten Randbereichen der Stirnflächenabschnitte 16, 17. Zwischen den Siegelbereichen 18, 19 ist in jedem Stirnflächenabschnitt 16, 17 eine im Verhältnis zu den Siegelbereichen 18, 19 abgesenkte Zone 21 ausgebildet. Wesentlich ist, daß der Abstand zwischen den einander zugewandten einen Siegelbereiche 18 der beiden Siegelbacken 11, 12 z.B. um 0,4 mm größer ist als der Abstand der anderen Siegelbereiche 19 zueinander.

Jede der Siegelbacken 11, 12 hat nahe der Stirnflächenabschnitte 16, 17 beiderseits der Aussparungen 15 bis knapp an die Aussparungen 15 heranreichende, schräg angeordnete Ausnehmungen 22. Durch die Ausnehmungen 22 werden die Stirnflächenabschnitte 16, 17 tragende, im Querschnitt dreieckförmige Zonen 23 gebildet, die mit den restlichen Zonen 24 der Siegelbacken 11, 12 mittels jeweils eines Verbindungssteges 25 einstückig verbunden sind. Dabei sind die den Aussparungen 15 abgewandten Bereiche der Zonen 23 mit den Siegelbereichen 19 als relativ dünne Stege 26 ausgebildet.

Selbstverständlich können die Ausnehmungen 22 auch parallel zu den Siegelbereichen 19 angeordnet sein, so daß die Zonen 23 in diesem Fall nicht dreiecksförmig, sondern im Querschnitt rechteckig ausgebildet sind.

Durch die Abkopplung der Zonen 23 von den Zonen 24 mittels der Ausnehmungen 22 und die Verbindung der Zonen 23 über die Verbindungsstege 25 mit den Zonen 24 wird erreicht, daß die Zonen 23 elastisch bzw. flexibel über die Verbindungsstege 25 mit den Zonen 24 verbunden sind.

Bevorzugt sind die Ausnehmungen 22 der besseren Wärmekopplung der Zonen 23 mit den Zonen 24 bzw. zur Vermeidung von Verschmutzungen mit einem elastischen Wärmeleitmittel 27 ausgefüllt.

Beim Betrieb der Vorrichtung 10 gelangt der vorgefaltete Kopfverschluß 2 sowie der ebenfalls vorgefaltete Bodenverschluß bei voneinander beabstandeten Siegelbacken 11, 12 zwischen die Zonen 23. Zum Siegeln der Quersiegelnaht 3 und der Bodenquernaht werden die beiden mittels der Heizstäbe 14 erwärmten Siegelbacken 11, 12 anschließend gegeneinander verfahren. Dadurch, daß die einander zugewandten Siegelbereiche 19 geringer zueinander beabstandet sind als die einander zugewandten Siegelbereiche 18, geraten die Siegelbereiche 19 zuerst in Kontakt mit dem Packstoff. Aufgrund der Flexibilität um die Verbindungsstege 25 sowie entlang der Stege 26 können sich insbesondere die Siegelbereiche 19 einer unterschiedlichen Anzahl von Packstofflagen in den Bereichen 7 und 8 derart anpassen, daß die Siegelbereiche 19 in den zweilagigen Bereichen 7 einen relativ hohen Siegeldruck auf den Packstoff ausüben bzw. daß zwischen den zweilagigen Bereichen 7 und den vierlagigen Bereichen 8 relativ geringe Siegeldruckunterschiede herrschen. Infolgedessen lassen sich qualitativ hochwertige, homogene Siegelnähte herstellen.

Ergänzend wird erwähnt, daß in den Siegelbereichen 18 der Siegeldruck entlang der Siegelnähte aufgrund der Anordnung der Siegelbereiche 18 in Verlängerung der Verbindungsstege 25 ungleichförmiger und aufgrund ihres größeren Abstandes (im Vergleich zu den Siegelbereichen 19) zueinander insgesamt gesehen geringer ist als in den Siegelbereichen 19. Dies ist jedoch insofern unkritisch, da sich die durch die Siegelbereiche 19 gebildeten Siegelnähte in den dem Füllgut abgewandten Randbereichen der Schlauchbeutelpackung 1 befinden.

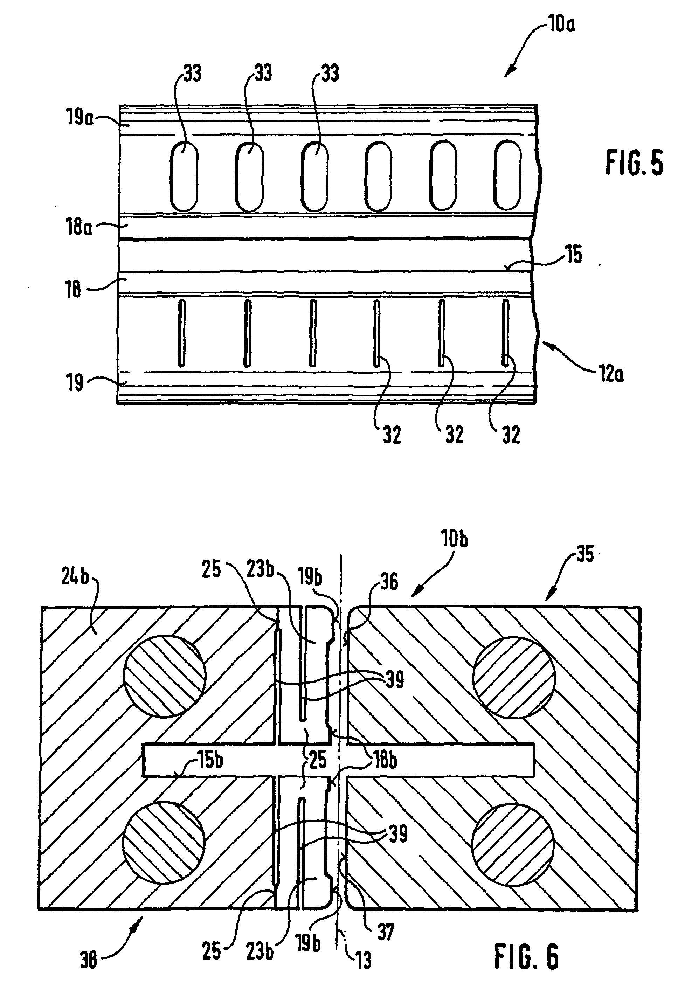

Bei der Vorrichtung 10a entsprechend der Figuren 4 und 5 sind die Ausnehmungen 22 durch schmale Schlitze 31 ersetzt, die zum Beispiel durch Erodieren erzeugt werden können. Die Schlitze 31 können, wie dargestellt, schräg zu den Siegelbereichen 18a, 19a verlaufen, oder aber parallel. Durch die schmalen Schlitze 31 wird der Federweg der Zonen 23a um den Verbindungssteg 25a reduziert, so daß bei einer Überlastung die Zonen 23a durch die Zonen 24a abgestützt werden. Auch ist die Wärmeleitung verbessert, so daß auf ein Wärmeleitmittel in den Schlitzen 31 ggf. verzichtet werden kann. Weiterhin sind zumindest entlang der Zonen 23a in der abgesenkten Zone 21a zusätzliche Schlitze 32 oder zusätzliche Aussparungen 33 ausgebildet. Dadurch läßt sich die Flexibilität der Siegelbacken 11a, 12a längs der Zonen 23a weiter erhöhen. Im Falle der zusätzlichen Aussparungen 33, die bevorzugt durch Fräsen erzeugt werden, reichen diese fertigungstechnisch bedingt bis in die Zonen 24a hinein. Die zusätzlichen Schlitze 32 und die zusätzlichen Aussparungen 33 können in den einzelnen Siegelbacken 11a, 12a miteinander kombiniert sein, d.h. zum Beispiel, daß lediglich in einer Siegelbacke 11a, 12a zusätzliche Schlitze 32 oder zusätzliche Aussparungen 33 ausgebildet sind, während die andere Siegelbacke 11a, 12a diese nicht aufweist. Auch können, wie dargestellt, zusätzliche Schlitze 32 und zusätzliche Aussparungen 33 in einer Siegelbacke 11a, 12a miteinander kombiniert werden, oder aber die zusätzlichen Schlitze 32 und die zusätzlichen Aussparungen 33 auf die Vorrichtung 10 übertragen werden.

Bei dem Ausführungsbeispiel gemäß der Figur 6 weist die Vorrichtung 10b eine Siegelbacke 35 mit zwei ebenen Siegelflächen 36, 37 und eine Siegelbacke 38 mit zwei Zonen 23b mit jeweils erhöhten Siegelbereichen 18b, 19b entsprechend der bisherigen Ausführungsbeispiele auf. Wesentlich ist, daß die Zonen 23b durch jeweils zwei parallel zueinander angeordnete Schlitze 39 unterteilt sind, wobei ein Schlitz 39 in jeder Zone 23b von der Aussparung 15b ausgeht, während der andere Schlitz 39 von der der Aussparung 15b abgewandten Außenseite der Siegelbacke 38 ausgeht. Bei der Vorrichtung 10b läßt sich ein größerer Federweg der Zonen 23b erzielen und weiterhin sind nun auch die Siegelbereiche 18b mit einem Federweg ausgestattet. Selbstverständlich lassen sich zur weiteren Erhöhung der Flexibilität auch die in den Figuren 4 und 5 beschriebenen zusätzlichen Schlitze 32 und die zusätzlichen Aussparungen 33 auf die Vorrichtung 10b übertragen. Weiterhin ist es denkbar, auch die Siegelbacke 35 entsprechend der Siegelbacke 38 mit Schlitzen 39 auszubilden.

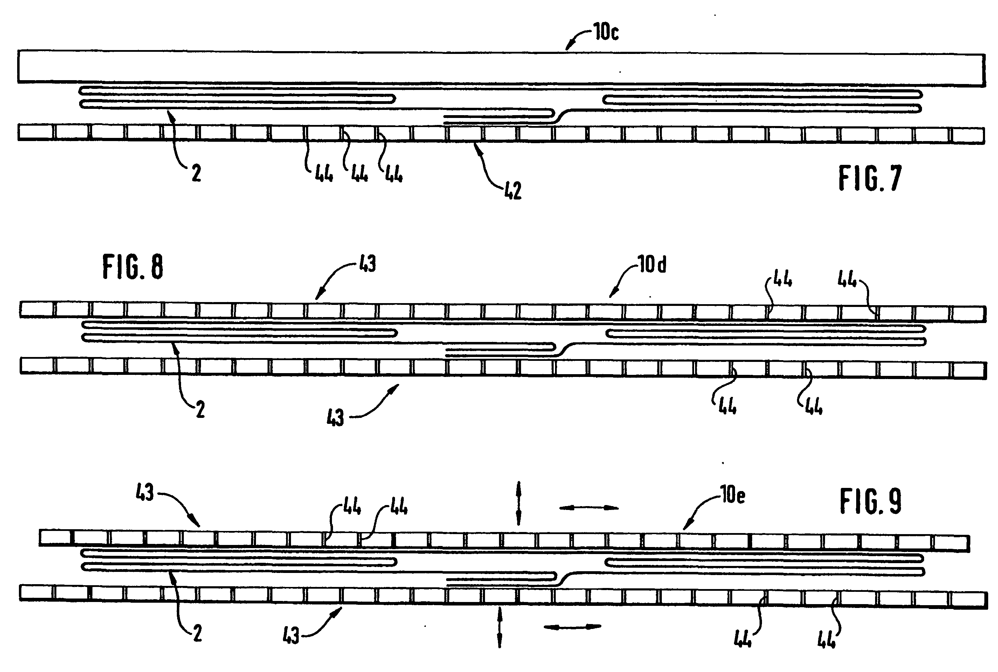

Die in den Figuren 1 bis 6 beschriebenen Ausführungsbeispiele können durch Siegelbacken 42, 43 modifiziert werden, wie sie in den Figuren 7 bis 9 dargestellt sind. Dort sind die Siegelbacken 42, 43 jeweils durch Längsschlitze 44, welche quer zu den zu bildenden Quernähten verlaufen, unterteilt. Mit anderen Worten gesagt bedeutet dies, daß die Siegelbereiche 18, 18a, 18b, 19, 19a, 19b in mehrere kleinere Siegelbereiche unterteilt werden. Die Längsschlitze 44 sind bei der Vorrichtung 10c gemäß Figur 7 nur an einer Siegelbacke 42 ausgebildet. Bei den Figuren 8 und 9 sind die Längsschlitze 44 demgegenüber an jeweils beiden Siegelbacken 43 der Vorrichtungen 10d und 10e ausgebildet, wobei die Längsschlitze 44 in den Siegelbacken 43. der Vorrichtung 10d jeweils zueinander fluchten, während die Längsschlitze 44 bei der Vorrichtung 10e in den beiden Siegelbacken 43 um jeweils eine halbe Teilung versetzt zueinander angeordnet sind. Durch die Längsschlitze 44 wird die Flexibilität der Siegelbacken 43 zum Ausgleich einer unterschiedlichen Anzahl an Packstofflagen entlang der Siegelnähte zusätzlich erhöht.

## Patentansprüche

1. Vorrichtung (10; 10a bis 10e) zum Verschließen von aus einem heißsiegelfähigen Material hergestellten Verpackungen (1), mit zwei gegeneinander verfahrbaren Siegelbacken (11, 12; 11a, 12a; 35, 38; 42; 43) zum Bilden von Quernähten (3) im Bereich von parallel zueinander in den Stirnflächen (16, 17) der Siegelbacken (11, 12; 11a, 12a; 35, 38, 42; 43) angeordneten Siegelflächen (18, 19; 18a, 19a; 18b), wobei wenigstens eine Siegelfläche (18, 19; 18a, 19a; 18b, 19b) zum Ausgleich unterschiedlicher Materialdicken der Verpackung (1) entlang der Quernähte (3) mittels einer schlitzförmigen Ausnehmung (22; 31; 39) in der Siegelbacke (11, 12; 11a, 12a; 35, 38; 42; 43) flexibel ausgebildet ist, **dadurch gekennzeichnet, daß** wenigstens eine Siegelbacke (11, 12; 11a, 12a; 35, 38; 42; 43) zwei voneinander durch eine Zwischenzone (21) getrennte Siegelflächen (18, 19; 18a, 19a; 18b, 19b) aufweist, die sich längs der Quernaht (3) erstrecken und daß eine der beiden Siegelflächen (19; 19a; 19b) einen geringeren Abstand zu der mit ihr zusammenwirkenden, gegenüberliegenden Siegelfläche (19; 19a; 36) aufweist als die andere Siegelfläche (18; 18a), so daß beim Gegeneinanderfahren der beiden Siegelbacken (11, 12; 11a, 12a; 35, 38; 42; 43) die einen geringen Abstand aufweisende Siegelfläche (19; 19a; 19b) beim Bilden der Quernaht (3) elastisch verformt wird.

2. Vorrichtung nach Anspruch 1, **dadurch gekennzeichnet, daß** jede Siegelbacke (11, 12; 11a, 12a; 35, 38; 42; 43) eine Aussparung (15) für eine Trenneinrichtung hat und daß die Siegelflächen (18, 19; 18a, 19a; 19b, 35) jeweils beidseitig der Aussparungen (15) angeordnet sind.

3. Vorrichtung nach Anspruch 1 oder 2, **dadurch gekennzeichnet, daß** die schlitzförmige Ausnehmung (22; 31; 39) einen die Siegelflächen (18, 19; 18a, 19a; 18b, 19b) tragenden Bereich (23; 23a; 23b) der Siegelbacke (11, 12; 11a, 12a; 35, 38; 42; 43) von dem restlichen Bereich (24; 24a; 24b) der Siegelbacke (11, 12; 11a, 12a; 35, 38; 42; 43) trennt und daß die beiden Bereiche (23, 24; 23a, 24a; 23b, 24b) mittels eines Verbindungssteges (25; 25a) miteinander verbunden sind.

4. Vorrichtung nach Anspruch 3, **dadurch gekennzeichnet, daß** eine Siegelfläche (19; 19b) auf der dem Verbindungssteg (25; 25a) abgewandten Seite an der Stirnfläche (16, 17) angeordnet und streifenförmig ausgebildet ist.

5. Vorrichtung nach Anspruch 3, **dadurch gekennzeichnet, daß** die Ausnehmung (22; 31) schräg angeordnet ist, so daß der eine Bereich (23; 23a) dreiecksförmig ausgebildet ist, wobei die eine Siegelfläche (19) im Bereich der Schmalseite (26) des einen Bereichs (23; 23a) angeordnet ist.

6. Vorrichtung nach einem der Ansprüche 1 bis 5, **dadurch gekennzeichnet, daß** in der Zwischenzone (21; 21a) senkrecht zur Siegelfläche (18, 19; 18b, 19b) verlaufende zusätzliche Aussparungen (32, 33) ausgebildet sind.

7. Vorrichtung nach einem der Ansprüche 1 bis 6, **dadurch gekennzeichnet, daß** der eine Bereich (23; 23a; 23b) durch quer zur Siegelfläche (18, 19; 18b, 19b) verlaufende Schlitze (44) unterteilt ist.

8. Vorrichtung nach einem der Ansprüche 1 bis 7, **dadurch gekennzeichnet, daß** die Ausnehmungen (22) mit einem elastischen Wärmekoppelmittel (27) ausgefüllt sind.

## Claims

1. Apparatus (10; 10a to 10e) for sealing packages (1) produced from a heat-sealable material, having two sealing cheeks (11, 12; 11a, 12a; 35, 38; 42; 43) which can be moved towards each other for forming transverse seams (3) in the region of sealing surfaces (18, 19; 18a, 19a; 18b) arranged parallel to one another in the end surfaces (16, 17) of the sealing cheeks (11, 12; 11a, 12a; 35, 38, 42; 43), at least one sealing surface (18, 19; 18a, 19a; 18b, 19b) being of flexible design in order to compensate for different material thicknesses of the package (1) along the transverse seams (3) by means of a slot-shaped recess (22; 31; 39) in the sealing cheek (11, 12; 11a, 12a; 35, 38; 42; 43), **characterized in that** at least one sealing cheek (11, 12; 11a, 12a; 35, 38; 42; 43) has two sealing surfaces (18, 19; 18a, 19a; 18b, 19b) which are separated from one another by an intermediate zone (21) and extend along the transverse seam (3), and **in that** one of the two sealing surfaces (19; 19a; 19b) is at a shorter distance from the opposite sealing surface (19; 19a; 36) interacting with it than the other sealing surface (18; 18a), with the result that when the two sealing cheeks (11, 12; 11a, 12a; 35, 38; 42; 43) are moved towards each other, the sealing surface (19; 19a; 19b) which is at a small distance is deformed elastically during formation of the transverse seam (3).

2. Apparatus according to Claim 1, **characterized in that** each sealing cheek (11, 12; 11a, 12a; 35, 38; 42; 43) has a cutout (15) for a separating device, and **in that** the sealing surfaces (18, 19; 18a, 19a; 19b, 35) are in each case arranged on both sides of the cutouts (15).

3. Apparatus according to Claim 1 or 2, **characterized in that** the slot-shaped recess (22; 31; 39) separates one region (23; 23a; 23b) of the sealing cheek (11, 12; 11a, 12a; 35, 38; 42; 43), which region bears the sealing surfaces (18, 19; 18a, 19a; 18b, 19b), from the remaining region (24; 24a; 24b) of the sealing cheek (11, 12; 11a, 12a; 35, 38; 42; 43), and **in that** the two regions (23, 24; 23a, 24a; 23b, 24b) are connected to each other by means of a connecting web (25; 25a).

4. Apparatus according to Claim 3, **characterized in that** one sealing surface (19; 19b) on the side facing away from the connecting web (25; 25a) is arranged on the end surface (16, 17) and is of strip-shaped design.

5. Apparatus according to Claim 3, **characterized in that** the recess (22; 31) is arranged obliquely, so that the one region (23; 23a) is of triangular design, the one sealing surface (19) being arranged in the region of the narrow side (26) of the one region (23; 23a).

6. Apparatus according to one of Claims 1 to 5, **characterized in that** in the intermediate zone (21; 21a) additional cutouts (32, 33) are formed running perpendicularly with respect to the sealing surface (18, 19; 18b, 19b).

7. Apparatus according to one of Claims 1 to 6, **characterized in that** the one region (23; 23a; 23b) is divided by slots (44) running transversely with respect to the sealing surface (18, 19; 18b, 19b).

8. Apparatus according to one of Claims 1 to 7, **characterized in that** the recesses (22) are filled with an elastic heat-coupling means (27).

## Revendications

1. Dispositif (10, 10a-10e) pour sceller des emballages (1) fabriqués en matière thermoscellable comprenant deux mâchoires de soudage (11, 12 ; 11a, 12a ; 35, 38, 42, 43) mobiles l'une par rapport à l'autre pour former des soudures transversales (3) dans la zone de la surface de soudage (18, 19, 18a, 19a, 18b), parallèles l'une à l'autre, au niveau des surfaces frontales (16, 17) des mâchoires de soudage (11, 12, 11a, 12a ; 35, 38, 42, 43),
au moins l'une des surfaces de soudage (18, 19, 18a, 19a, 18b, 19b) étant souple pour compenser les épaisseurs différentes de la matière de l'emballage (1) le long des soudures transversales (3) avec une cavité (22, 31, 39) en forme de fente réalisée dans les mâchoires de soudage (11, 12, 11a, 12a ; 35, 38, 42, 43),
**caractérisé en ce qu'**
au moins une mâchoire de soudage (11, 12, 11a, 12a ; 35, 38, 42, 43) comporte deux surfaces de soudage (18, 19, 18a, 19a, 18b, 19b) séparées par une zone intermédiaire (21) s'étendant le long de la soudure transversale (3) et
l'une des deux surfaces de soudage (19, 19a, 19b) est à une distance plus faible de la surface de soudage (19, 19a, 36) opposée avec laquelle elle coopère que les autres surfaces de soudage (18, 18a) si bien que lors du rapprochement des deux mâchoires de soudages (11, 12, 11a, 12a ; 35, 38, 42, 43), la surface de soudage (19, 19a, 19b) de faible distance, se déforme élastiquement en formant la soudure transversale (3).

2. Dispositif selon la revendication 1,
**caractérisé en ce que**
chaque mâchoire de soudage (11, 12, 11a, 12a; 35, 38, 42, 43) comporte une cavité (15) pour une installation de séparation et
les surfaces de soudage (18, 19, 18a, 19a, 19b, 35) sont respectivement de part et d'autre des cavités (15).

3. Dispositif selon les revendications 1 ou 2,
**caractérisé en ce que**
la cavité (22, 31, 39) en forme de fente sépare une zone (23, 23a, 23b) portant les surfaces de soudage (18, 19, 18a, 19a, 18b, 19b) de la mâchoire de soudage (11, 12, 11a, 12a ; 35, 38, 42, 43) par rapport à la partie restante (24, 24a, 24b) de la mâchoire de soudage (11, 12, 11a, 12a ; 35, 38, 42, 43) et
les deux zones (23, 24, 23a, 24a, 23b, 24b) sont reliées par une entretoise de liaison (25, 25a).

4. Dispositif selon la revendication 3,
**caractérisé en ce qu'**
une surface de scellement (19, 19b) sur le côté opposé à celui de l'entretoise de liaison (25, 25a), est prévue sur la surface frontale (16, 17) et elle a une forme de bande.

5. Dispositif selon la revendication 3,
**caractérisé en ce que**
la cavité (22, 31) est en biais de façon à former une zone triangulaire (23, 23a), une surface de soudage (15) étant prévue au niveau du petit côté (26) d'une zone (23, 23a).

6. Dispositif selon l'une des revendications 1 à 5,
**caractérisé en ce que**
dans la zone intermédiaire (21, 21a), on a des cavités (32, 33) supplémentaires, perpendiculaires à la surface de soudage (18, 19, 18b, 19b).

7. Dispositif selon l'une des revendications 1 à 6,
**caractérisé en ce qu'**
une zone (23, 23a, 23b) est subdivisée par des fentes (44) transversales à la surface de scellement (18, 19, 18b, 19b).

8. Dispositif selon l'une des revendications 1 à 7,
**caractérisé en ce que**
les cavités (22) sont remplies d'un agent élastique de couplage thermique (27).
